(19) Europäisches Patentamt
European Patent Office
Office européen des brevets

(11) **EP 3 972 178 A1**

(12) **EUROPEAN PATENT APPLICATION**
published in accordance with Art. 153(4) EPC

(43) Date of publication:
**23.03.2022 Bulletin 2022/12**

(21) Application number: **20822428.7**

(22) Date of filing: **25.05.2020**

(51) International Patent Classification (IPC):
**H04L 5/00** (2006.01)    **H04L 27/20** (2006.01)
**H04B 17/20** (2015.01)

(52) Cooperative Patent Classification (CPC):
**H04B 17/20; H04L 1/00; H04L 5/00; H04L 25/02; H04L 27/20; H04L 27/26**

(86) International application number:
**PCT/CN2020/092064**

(87) International publication number:
**WO 2020/248806 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.06.2019 CN 201910507484**

(71) Applicant: **Huawei Technologies Co., Ltd.**
**Longgang District**
**Shenzhen,**
**Guangdong 518129 (CN)**

(72) Inventors:
• **WU, Tao**
  **Shenzhen, Guangdong 518129 (CN)**
• **CHEN, Teyan**
  **Shenzhen, Guangdong 518129 (CN)**
• **JIA, Jia**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **BACK REFLECTION COMMUNICATION METHOD AND APPARATUS**

(57) This application provides a back-reflection communications method and apparatus. The method includes: A first device generates a back-reflection signal of a background signal, where the background signal is a signal transmitted by a second device. The first device sends the back-reflection signal of the background signal in a back-reflection communications mode. Duration of one modulation symbol in the back-reflection signal is N times duration of one channel estimation unit in the background signal, a time start location of the modulation symbol is aligned with a time start location of the signal estimation unit, and N is an integer greater than or equal to 1. Based on this, a change brought by the back-reflection signal to the background signal is based on the duration of the channel estimation unit. Although the back-reflection signal changes an amplitude or a phase of the background signal, the change of the background signal in one or more channel estimation units is constant, and the change may be obtained through channel estimation, to eliminate impact of the back-reflection signal on normal transmission of the background signal.

A first device generates a back-reflection signal of a background signal, where the background signal is a signal transmitted by a second device — S201

The first device sends the back-reflection signal of the background signal in a back-reflection communications mode, where duration of one modulation symbol in the back-reflection signal is N times duration of one channel estimation unit in the background signal, a time start location of the modulation symbol is aligned with a time start location of the signal estimation unit, and N is an integer greater than or equal to 1 — S202

FIG. 2

## Description

## Description

This application claims priority to Chinese Patent Application No. 201910507484.1, filed with the China National Intellectual Property Administration on June 12, 2019 and entitled "BACK-REFLECTION COMMUNICATIONS METHOD AND APPARATUS", which is incorporated herein by reference in its entirety.

## TECHNICAL FIELD

This application relates to the field of communications technologies, and in particular, to a back-reflection communications method and apparatus.

## BACKGROUND

A modulated backscattering technology has features such as low costs and low power consumption. Different from a conventional communications technology, a transmitter that uses the modulated backscattering technology does not generate a radio frequency (Radio Frequency, RF) signal itself, but sends data by modulating a radio frequency signal in an environment. The radio frequency signal in the environment includes: an excitation signal particularly used by the transmitter to perform reflection, and a background signal in the environment. The background signal may be a signal such as a radio television signal, a broadcast signal, a signal sent by a mobile communications station, a signal sent by an access point (Access Point, AP), a signal sent by a dedicated card reader, or the like.

The modulation backscattering technology in which data transmission is performed by modulating the radio frequency signal in the environment to perform reflection may be referred to as back-reflection communication. The back-reflection communication in which the background signal is reflected has the following advantages: No dedicated excitation signal needs to be sent, and the background signal does not need to occupy a dedicated frequency band. Therefore, the back-reflection communication is applicable to the internet of things (Internet of Things, IoT) communications field.

However, when reflecting the background signal, the transmitter changes a feature of the background signal, and therefore normal transmission of original information of the background signal may be affected.

## SUMMARY

This application provides a back-reflection communications method and apparatus, to avoid or reduce impact of a back-reflection signal on normal transmission of a background signal.

According to a first aspect, this application provides a back-reflection communications method, including: A first device generates a back-reflection signal of a background signal, where the background signal is a signal transmitted by a second device. The first device sends the back-reflection signal of the background signal in a back-reflection communications mode. Duration of one modulation symbol in the back-reflection signal is N times duration of one channel estimation unit in the background signal, a time start location of the modulation symbol is aligned with a time start location of the signal estimation unit, and N is an integer greater than or equal to 1.

According to a second aspect, this application provides a back-reflection communications method, including: A first device receives a background signal transmitted by a second device, where the background signal carries a back-reflection signal sent to the first device. The first device parses the back-reflection signal. Duration of one modulation symbol in the back-reflection signal is N times duration of one channel estimation unit in the background signal, a time start location of the modulation symbol is aligned with a time start location of the signal estimation unit, and N is an integer greater than or equal to 1.

The back-reflection communications method provided in this application has the following technical effects: Although the back-reflection signal changes an amplitude or a phase of the background signal, the change of the background signal in one or more channel estimation units is constant, and the change may be obtained through channel estimation, to eliminate impact of the back-reflection signal on normal transmission of the background signal.

Optionally, the background signal includes a physical layer preamble and a data field, and the data field includes at least one signal estimation unit.

The channel estimation unit includes one channel estimation field, and at least one data symbol adjacent to the channel estimation field. To be specific, when the background signal is a signal using a Wi-Fi-type pilot structure, the background signal includes the constructed channel estimation unit. Duration of one modulation symbol in the back-reflection signal is N times duration of one channel estimation unit in the background signal, and a time start location of the modulation symbol is aligned with a time start location of the signal estimation unit. Based on this, a change of the background signal in the one or more channel estimation units is constant, and the change may be obtained through channel estimation, to eliminate the impact of the back-reflection signal on the normal transmission of the background signal.

Optionally, the data field includes a data part and a padding part, the physical layer preamble of the background signal includes a first length indication and a second length indication, the first length indication is used to indicate a length of the data part, and the second length indication is used to indicate a length of the padding part. In this way, the first device can parse the data field according to the first length indication and the second length indication.

Optionally, a modulation scheme of the back-reflection signal is QPSK, BPSK, or OOK.

Optionally, when the background signal is a signal using an LTE-type pilot structure, the channel estimation unit includes a plurality of symbols, each symbol includes at least one pilot subcarrier, and the pilot subcarrier is used for channel estimation. To be specific, when the background signal is the signal using the LTE-type pilot structure, the background signal includes the channel estimation unit. Duration of one modulation symbol in the back-reflection signal is N times duration of one channel estimation unit in the background signal, and a time start location of the modulation symbol is aligned with a time start location of the signal estimation unit. Based on this, although the back-reflection signal changes the amplitude or the phase of the background signal, the change of the background signal in the one or more channel estimation units is constant, and the change may be obtained through channel estimation, to eliminate the impact of the back-reflection signal on the normal transmission of the background signal.

Optionally, pilot subcarriers on the plurality of symbols are evenly distributed on the plurality of symbols.

According to a third aspect, this application provides a back-reflection communications method, including: A first device generates a back-reflection signal of a background signal, where the background signal is a signal transmitted by a second device. The first device sends the back-reflection signal of the background signal in a back-reflection communications mode. A data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

According to a fourth aspect, this application provides a back-reflection communications method, including: A first device receives a background signal transmitted by a second device, where the background signal carries a back-reflection signal sent to the first device. The first device parses the back-reflection signal. A data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

The back-reflection communications method provided in this application has the following technical effects: Although the back-reflection signal changes a phase of the background signal, the change of the background signal in one or more data symbols is constant, and the change may be obtained through phase deviation estimation, to eliminate impact of the back-reflection signal on the background signal.

Optionally, the background signal includes a physical layer preamble and a data field, and the data field includes at least one data symbol.

Optionally, the data field includes a data part and a padding part, the physical layer preamble of the background signal includes a first length indication and a second length indication, the first length indication is used to indicate a length of the data part, and the second length indication is used to indicate a length of the padding part. In this way, the first device can parse the data field according to the first length indication and the second length indication.

Optionally, the back-reflection signal is a signal using a QPSK or a BPSK modulation scheme.

The following provides a back-reflection communications apparatus and device, a storage medium, and a computer program product. To avoid repetition with the back-reflection communications apparatus and the foregoing back-reflection communications method, details are not described herein again.

According to a fifth aspect, this application provides a back-reflection communications apparatus, including:

a generation module, configured to generate a back-reflection signal of a background signal, where the background signal is a signal transmitted by a second device; and
a sending module, configured to send the back-reflection signal of the background signal in a back-reflection communications mode.

Duration of one modulation symbol in the back-reflection signal is N times duration of one channel estimation unit in the background signal, a time start location of the modulation symbol is aligned with a time start location of the signal estimation unit, and N is an integer greater than or equal to 1.

According to a sixth aspect, this application provides a back-reflection communications apparatus, including:

a receiving module, configured to receive a background signal transmitted by a second device, where the background signal carries a back-reflection signal sent to the communications apparatus; and
a parsing module, configured to parse the back-reflection signal.

Duration of one modulation symbol in the back-reflection signal is N times duration of one channel estimation unit in the background signal, a time start location of the modulation symbol is aligned with a time start location of the signal estimation unit, and N is an integer greater than or equal to 1.

According to a seventh aspect, this application provides a back-reflection communications apparatus, including:

a generation module, configured to generate a back-reflection signal of a background signal, where the background signal is a signal transmitted by a second device; and

a sending module, configured to send the back-reflection signal of the background signal in a back-reflection communications mode.

A data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

According to an eighth aspect, this application provides a back-reflection communications apparatus, including:

a receiving module, configured to receive a background signal transmitted by a second device, where the background signal carries a back-reflection signal sent to the communications apparatus; and

a parsing module, configured to parse the back-reflection signal.

A data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

According to a ninth aspect, this application provides a back-reflection communications device, including a memory, a processor, and a transceiver. The memory stores computer instructions, the transceiver is configured to perform data transmission with another device, and the processor is configured to execute the computer instructions, to implement some or all of the back-reflection communications method according to any one of the foregoing aspects or the optional manners of any one of the foregoing aspects.

According to a tenth aspect, this application provides a computer storage medium. The computer storage medium includes computer instructions, and when the instructions are executed by a computer, the computer is enabled to implement the back-reflection communications method according to any one of the foregoing aspects or the optional manners of any one of the foregoing aspects.

According to an eleventh aspect, this application provides a computer program product, including instructions. When a computer program is executed by a computer, the instructions enable the computer to implement the back-reflection communications method according to any one of the foregoing aspects or the optional manners of any one of the foregoing aspects.

This application provides the back-reflection communications method and apparatus. Duration of one modulation symbol in the back-reflection signal is N times duration of one channel estimation unit in the background signal, a time start location of the modulation symbol is aligned with a time start location of the signal estimation unit, and N is an integer greater than or equal to 1. In this way, a change brought by the back-reflection signal to the background signal is based on the duration of the channel estimation unit. Therefore, the channel does not change within one channel estimation unit, and the change brought by the back-reflection signal to the background signal does not affect normal reception of the background signal. Alternatively, a data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1. In this way, a change brought by the back-reflection signal to the background signal is based on the duration of the data symbol. Therefore, a phase of the background signal does not change within one data symbol, and the change brought by the back-reflection signal to the background signal does not affect normal reception of the background signal.

**BRIEF DESCRIPTION OF DRAWINGS**

FIG. 1A is a schematic diagram of an application scenario according to an embodiment of this application;

FIG. 1B is a schematic diagram of an application scenario according to another embodiment of this application;

FIG. 1C is a schematic diagram of an application scenario according to still another embodiment of this application;

FIG. 2 is a flowchart of a back-reflection communications method according to an embodiment of this application;

FIG. 3 is a schematic diagram of a back-reflection signal and a background signal using a Wi-Fi-type pilot structure according to an embodiment of this application;

FIG. 4 is a schematic diagram of a back-reflection signal and a background signal using a Wi-Fi-type pilot structure according to another embodiment of this application;

FIG. 5 is a schematic diagram of a background signal using an LTE-type pilot structure according to an embodiment of this application;

FIG. 6 is a schematic diagram of channel estimation in an LTE communications mode according to an embodiment of this application;

FIG. 7 is a schematic diagram of a back-reflection signal and a background signal using an LTE-type pilot structure according to an embodiment of this application;

FIG. 8 is a schematic diagram of a back-reflection signal and a background signal using an LTE-type pilot structure according to another embodiment of this application;

FIG. 9 is a schematic diagram of an application scenario according to still another embodiment of this application;

FIG. 10 is a flowchart of a back-reflection communications method according to another embodiment of this application;

FIG. 11 is a schematic diagram of an application scenario according to still another embodiment of this application;

FIG. 12 is a flowchart of a back-reflection communications method according to yet another embodiment of this application;

FIG. 13 is a schematic diagram of a back-reflection signal and a background signal using a Wi-Fi-type pilot structure according to an embodiment of this application;

FIG. 14 is a flowchart of a back-reflection communications method according to still another embodiment of this application;

FIG. 15 is an interaction flowchart of a back-reflection communications method according to yet another embodiment of this application;

FIG. 16 is a schematic diagram of a back-reflection communications apparatus 1600 according to an embodiment of this application;

FIG. 17 is a schematic diagram of a back-reflection communications apparatus 1700 according to an embodiment of this application;

FIG. 18 is a schematic diagram of a back-reflection communications apparatus 1800 according to an embodiment of this application;

FIG. 19 is a schematic diagram of a back-reflection communications apparatus 1900 according to an embodiment of this application; and

FIG. 20 is a schematic diagram of a back-reflection communications device 2000 according to an embodiment of this application.

## DESCRIPTION OF EMBODIMENTS

As described above, a modulation backscattering technology in which back-reflection communication is performed by modulating a radio frequency signal in an environment to perform reflection may be referred to as the back-reflection communication. The back-reflection communication in which a background signal is reflected has the following advantages: No dedicated excitation signal needs to be sent, and the background signal does not need to occupy a dedicated frequency band. Therefore, the back-reflection communication is applicable to the IoT communications field. However, when reflecting the background signal, a transmitter changes a feature of the background signal, and therefore normal transmission of original information of the background signal may be affected. The original information may be information such as a voice, video, and an image. It should be noted that the modulation backscattering technology is not only applicable to the IoT communications field. Therefore, the technical solutions of this application are not only applicable to the IoT communications field.

This application provides a back-reflection communications method and apparatus. The back-reflection communication is used to ensure the normal transmission of the background signal. Network elements in this application include at least a first device and a second device.

The first device is a wireless communications apparatus having a back-reflection communications function, has a capability of modulating the radio frequency signal in the environment to send information, and further has a capability of demodulating the radio frequency signal in the environment to receive a signal. Optionally, when the first device is used as a transmit end, the first device is a device that sends data in a back-reflection communications mode. When the first device is used as a receive end, the first device is a device that receives data through the background signal. The first device may alternatively be a passive device, or the first device may alternatively be an active device, but has the back-reflection communications function. The first device may be an IoT device in an IoT communications network, for example, a label in the IoT communications network.

Optionally, the second device is an apparatus having a wireless communications function. The wireless communications apparatus may comply with a wireless communications standard, for example, a cellular communications standard or a wireless local area network (Wireless Local Area Network, WLAN) communications standard. Optionally, the background signal may be a broadcast signal sent by the second device, or a signal used for communication between the second device and a third device.

Optionally, the second device and/or the third device are/is a wireless communications apparatus having the wireless communications function. For example, the second device and/or the third device is a base transceiver station (Base Transceiver Station, BTS for short) in a global system for mobile communications (Global System for Mobile Communications, GSM for short) or code division multiple access (Code Division Multiple Access, CDMA for short), may be a NodeB (NodeB, NB for short) in wideband code division multiple access (Wideband Code Division Multiple Access, WCDMA for short), may be an evolved NodeB (evolved NodeB, eNB for short), an access point (access point, AP), or a relay station in an LTE network; may be a base station or the like in a next generation network (namely, a 5G network), or may be an AP, a station (Station, STA), or the like that supports the 802.11 protocol. Optionally, the second device and/or the third device is a terminal device or user equipment. The terminal device may be a device that provides a voice and/or data connectivity for a user, a handheld device with a wireless connection function, or another processing device connected to a wireless modem. The terminal device may communicate with at least one core network by using a radio access network (Radio Access Network, RAN). The terminal device may be a mobile terminal, for example, a mobile phone (or referred to as a "cellular" phone), and a computer that has a mobile terminal. For example, the terminal device may be a portable, pocket-size, handheld, computer-built-in or vehicle-mounted mobile apparatus, which exchanges voice and/or data with the radio access network. The terminal device may also be referred to as a subscriber unit (Subscriber Unit), a subscriber station (Subscriber Station), a mobile station (Mobile Station), a remote station (Remote Station), an access point (Access Point), a remote terminal (Remote Terminal), an access terminal (Access Terminal), a user terminal (User Terminal), a user agent (User Agent), or user equipment (User Equipment). This is not limited herein.

Optionally, a communications mode between the second device and the third device includes but is not limited to an end-to-end (D2D) communications mode used between the second device and the third device. For example, both the second device and the third device are terminal devices. Alternatively, a cellular communications mode is used between the second device and the third device. For example, the second device is a base station, and the third device is a terminal device; or the second device is a terminal device, and the third device is a base station. Alternatively, a wireless fidelity (Wireless Fidelity, Wi-Fi) communications mode is used between the second device and the third device. For example, the second device is an AP, and the third device is a STA; the second device is a STA, and the third device is an AP; both the second device and the third device are APs; or both the second device and the third device are STAs.

Optionally, the first device may send a back-reflection signal of the background signal to the second device or the third device in the back-reflection communications mode, or may send the back-reflection signal of the background signal to the fourth device in the back-reflection communications mode. The fourth device may be an IoT device in the IoT communications network. The fourth device may be a passive device or an active device. Based on this, with reference to the foregoing content, the following describes an application scenario to which the technical solutions of this application are applicable. It should be noted that the application scenario in this application is not limited to the following several cases. Certainly, quantities of the first device, the second device, the third device, and the fourth device in this embodiment of this application are merely examples.

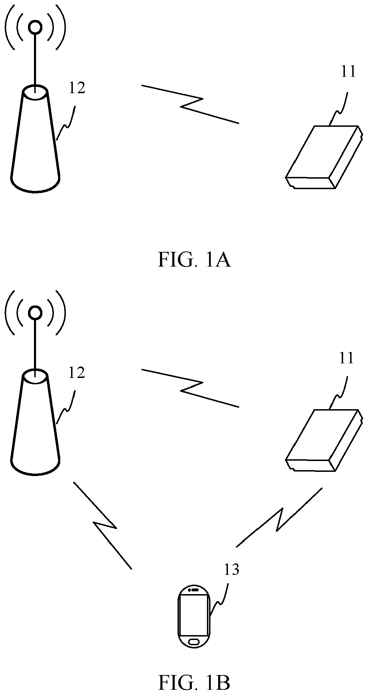

Scenario 1: FIG. 1A is a schematic diagram of an application scenario according to an embodiment of this application. As shown in FIG. 1A, there are two network elements in this scenario: a first device 11 and a second device 12. The second device 12 may generate a background signal. The first device 11 sends a back-reflection signal to the second device 12 through the background signal, or receives the background signal from the second device 12. The background signal carries the back-reflection signal.

Scenario 2: FIG. 1B is a schematic diagram of an application scenario according to another embodiment of this application. As shown in FIG. 1B, there are three network elements in this scenario: a first device 11, a second device 12, and a third device 13. A background signal is transmitted between the second device 12 and the third device 13. The second device 12 or the third device 13 may generate the background signal. The first device 11 sends a back-reflection signal to the second device 12 or the third device 13 through the background signal, or receives the background signal from the second device 12 or the third device 13. The background signal carries the back-reflection signal.

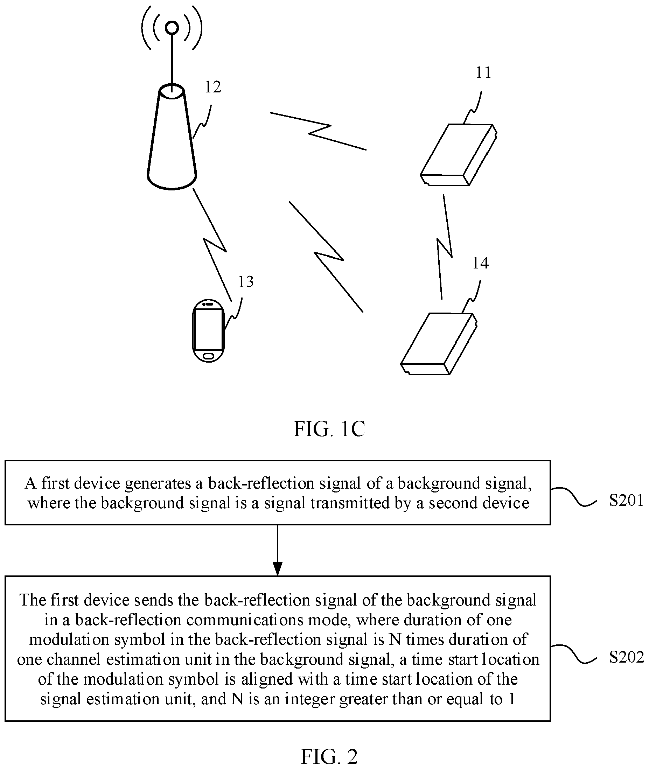

Scenario 3: FIG. 1C is a schematic diagram of an application scenario according to still another embodiment of this application. As shown in FIG. 1C, there are four network elements in this scenario: a first device 11, a second device 12, a third device 13, and a fourth device 14. A background signal is transmitted between the second device 12 and the third device 13. The second device 12 or the third device 13 may generate the background signal. The first device 11 sends a back-reflection signal to the fourth device 14 through the background signal.

Based on any one of the foregoing scenarios, the following describes the technical solutions of this application.

FIG. 2 is a flowchart of a back-reflection communications method according to an embodiment of this application. As shown in FIG. 2, the method includes the following procedures.

Step S201: A first device generates a back-reflection signal of a background signal, where the background signal is a signal transmitted by a second device.

Step S202: The first device sends the back-reflection signal of the background signal in a back-reflection communications mode. Duration of one modulation symbol in the back-reflection signal is N times duration of one channel estimation unit in the background signal, a time start location of the modulation symbol is aligned with a time start location of the signal estimation unit, and N is an integer greater than or equal to 1.

A symbol obtained after information in the back-reflection signal is modulated is referred to as the modulation symbol, and the duration of the one modulation symbol in the back-reflection signal is duration of the modulation symbol.

Optionally, after detecting the background signal, the first device modulates to-be-sent information based on the duration of the channel estimation unit in the background signal, to obtain the back-reflection signal, so that the duration of the one modulation symbol in the back-reflection signal obtained through modulation is N times the duration of the channel estimation unit. The first device sends the background signal, so that the time start location of the modulation symbol is aligned with the time start location of the signal estimation unit. Optionally, a modulation method includes phase modulation and amplitude modulation.

It should be noted that the background signal may be sent by the second device, or may be sent by the second device to the third device, another device, or the like.

Optionally, the one channel estimation unit is a minimum channel estimation unit in the background signal. For example, when the second device communicates with another device in an LTE communications mode, the channel estimation unit may include a plurality of orthogonal frequency division multiplexing (Orthogonal Frequency Division Multiplexing, OFDM) symbols. Each OFDM symbol includes at least one pilot subcarrier, and the pilot subcarrier is used for channel estimation. Alternatively, when the second device communicates with another device in a Wi-Fi communications mode, the channel estimation unit may include one channel estimation field and at least one OFDM symbol adjacent to the channel estimation field. The channel estimation field is used to perform signal estimation, and the channel estimation field may be a MidAmble field specified in 802.11ax.

As described above, the second device may communicate with the another device in a cellular communications mode or the Wi-Fi communications mode. This embodiment mainly describes a back-reflection communications mode used when the second device communicates with the another device in the LTE communications mode or the Wi-Fi communications mode.

Optional manner 1: When the second device communicates with the another device in the Wi-Fi communications mode, the background signal uses a Wi-Fi-type pilot structure. Optionally, the background signal using the Wi-Fi-type pilot structure includes a physical layer preamble and a data field, and the data field includes at least one signal estimation unit. The channel estimation unit includes one MidAmble and at least one data symbol adjacent to the MidAmble.

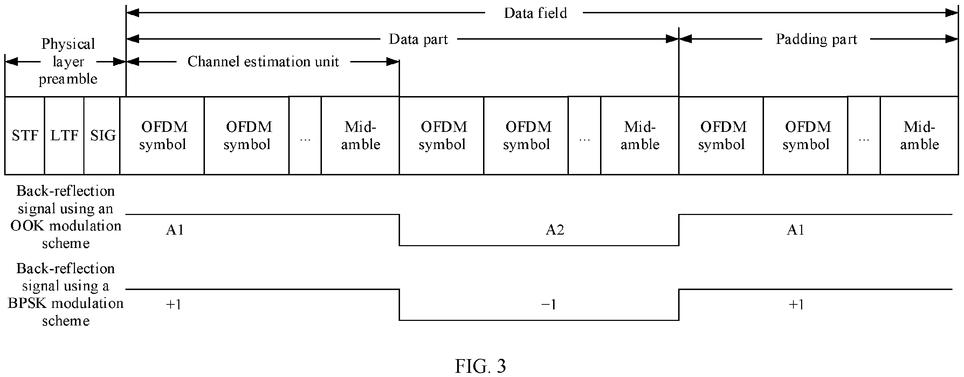

For example, FIG. 3 is a schematic diagram of a back-reflection signal and a background signal using a Wi-Fi-type pilot structure according to an embodiment of this application. As shown in FIG. 3, the background signal includes a physical layer preamble and a data field, and the data field includes at least one signal estimation unit. For example, the physical layer preamble includes a short training field (Short Training Field, STF), a long training field (Long Training Field, LTF), and a signaling (Signal, SIG) field. The STF is a sequence known by a transmit end and a receive end, and is used to synchronize the receive end and the transmit end. The LTF is a sequence known by the transmit end and the receive end, and is used by the receive end to perform channel estimation. The SIG field is control signaling, and is used to indicate information such as a modulation scheme and a coding scheme used for data sent by the transmit end. The data field includes at least one channel estimation unit, and each channel estimation unit includes one MidAmble and at least one data symbol adjacent to the MidAmble (in other words, the MidAmble and following or preceding M OFDM symbols form one channel estimation unit, where M is an integer greater than or equal to 1). The data symbol may be an OFDM symbol. In the channel estimation unit, the MidAmble field is used for channel estimation.

In this embodiment of this application, duration of one modulation symbol in the back-reflection signal is N times duration of one channel estimation unit in the background signal, a time start location of the modulation symbol is aligned with a time start location of the signal estimation unit, and N is an integer greater than or equal to 1. Based on this, although the back-reflection signal changes an amplitude or a phase of the background signal, the change of the background signal in one or more channel estimation units is constant, and the change may be obtained through channel estimation, to eliminate impact of the back-reflection signal on normal transmission of the background signal.

As shown in FIG. 3, each segment of signal whose amplitude is A1 or A2 is an on-off keying (On-Off Keying, OOK) modulation symbol. Duration of the OOK modulation symbol is one time the duration of the one channel estimation unit in the background signal. In other words, the duration of the OOK modulation symbol is the same as the duration of the one channel estimation unit, and a time start location of each OOK modulation symbol is aligned with a time start location of a corresponding signal estimation unit. Similarly, duration of a BPSK modulation symbol obtained by using a BPSK modulation scheme is one time the duration of the one channel estimation unit in the background signal. In other words, the duration of the BPSK modulation symbol is the same as the duration of the one channel estimation unit. In addition, a time start location of each BPSK modulation symbol is aligned with a time start location of a corresponding signal estimation unit.

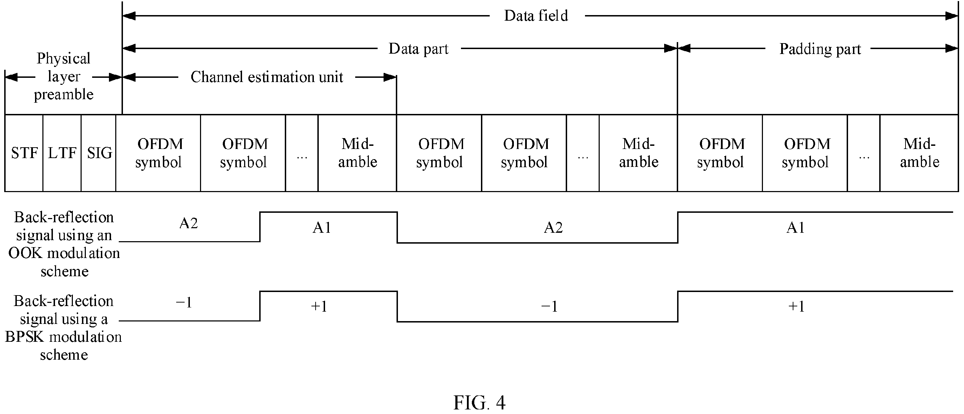

Based on this, although the back-reflection signal changes the amplitude of the background signal (for example, when the back-reflection signal uses the OOK modulation scheme, the back-reflection signal changes the amplitude of the background signal) or the phase (for example, when the back-reflection signal uses the BPSK modulation scheme, the back-reflection signal changes the phase of the background signal), the change of the background signal in one or more channel estimation units is constant, and the change may be obtained through channel estimation, to eliminate the impact of the back-reflection signal on the normal transmission of the background signal. For example, FIG. 4 is a schematic diagram of a back-reflection signal and a background signal using a Wi-Fi-type pilot structure according to another embodiment of this application. Compared with FIG. 3 and FIG. 4, the back-reflection signal and the background signal shown in FIG. 4 do not have the following relationship: Duration of one modulation symbol in the back-reflection signal is N times duration of one channel estimation unit in the background signal, and a time start location of the modulation symbol is aligned with a time start location of the signal estimation unit. In FIG. 4, energy in the first half of a first channel estimation unit is reduced through reflection of the first device, and energy in the last half of the first channel estimation unit is enhanced through reflection of the first device. This causes a large deviation in channel estimation, and further causes a situation in which the background signal is incorrectly received or the background signal cannot be received. On the contrary, as shown in FIG. 3, the change brought by the back-reflection signal to the background signal is based on the duration of the channel estimation unit, and therefore the change brought by the back-reflection signal to the background signal does not affect normal reception of the background signal.

Optionally, the data field of the background signal includes a data part, and the data part includes data sent by the second device. If transmission duration of the data part is less than transmission duration of the back-reflection signal, the data field further includes a padding part. As shown in FIG. 3, the data field includes three channel estimation units, the data part includes first two channel estimation units in the three channel estimation units, and the padding part includes the last channel estimation unit in the three channel estimation units. Based on this, the physical layer preamble of the background signal further includes information used to indicate a length of the data part and a length of the padding part. In an example, the information includes a first length indication and a second length indication. The first length indication is used to indicate the length of the data part, the second length indication is used to indicate the length of the padding part, and a sum of the length of the data part and the length of the padding part is a length of the data field. In another example, the information may include a total length indication and the first length indication, and the total length indication is used to indicate a total length of the data field. In still another example, the information may include the total length indication and the second length indication. It should be noted that "length" herein may refer to a length of a byte, or may refer to duration. It may be understood that the sum of the length of the data part and the length of the padding part is the length of the data field. Therefore, the physical layer preamble may indicate any two lengths thereof. In an example, an indication of any length may be carried in an L-Length field of the physical layer preamble, and another length indication may be carried in another field, for example, a newly added field, of the physical layer preamble. Alternatively, both the two length indications are carried in the SIG field.

Optional manner 2: When the second device communicates with the another device in the LTE communications mode, the background signal uses an LTE-type pilot structure. Optionally, the background signal using the LTE-type pilot structure includes a plurality of OFDM symbols, each OFDM symbol includes at least one pilot subcarrier, and the pilot subcarrier is used for channel estimation. Optionally, pilot subcarriers on the plurality of OFDM symbols are evenly distributed on the plurality of OFDM symbols.

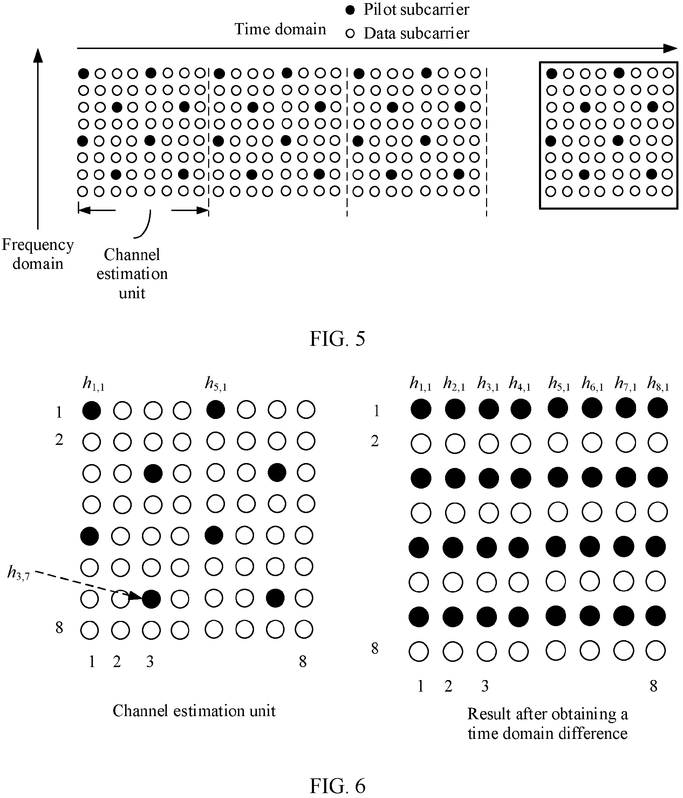

For example, FIG. 5 is a schematic diagram of a background signal using an LTE-type pilot structure according to an embodiment of this application. As shown in FIG. 5, each OFDM symbol has a data subcarrier and a pilot subcarrier, and the pilot subcarrier is used to send a known signal that is used by a receive end to perform channel estimation. To minimize pilot overheads, pilot subcarriers on each OFDM symbol are evenly distributed at a spacing of a specific quantity in frequency domain, and also have a feature of even distribution in time domain.

FIG. 6 is a schematic diagram of channel estimation in an LTE communications mode according to an embodiment of this application. As shown in FIG. 6, one OFDM symbol has eight subcarriers. For example, eight OFDM symbols form one channel estimation unit. $h_{i,j}$ represents a channel response, of an $i^{th}$ OFDM symbol, on a $j^{th}$ subcarrier, for example, $h_{3,7}$ represents a channel response, of a third OFDM symbol, on a seventh subcarrier.

First, because the signal sent on the pilot subcarrier is a known signal, channels corresponding to pilot subcarriers may be estimated, which are sequentially: $h_{1,1}$, $h_{1,5}$, $h_{3,1}$, $h_{3,5}$, $h_{5,1}$, $h_{5,5}$, and $h_{7,1}$, $h_{7,5}$.

Then, channels, on all subcarriers, corresponding to the pilot subcarrier are calculated by using a time domain interpolation. For example, for the first subcarrier, $h_{1,1}$, $h_{2,1}$, $\cdots$, $h_{4,1}$ and $h_{5,1}$, $h_{6,1}$, $\cdots$, $h_{8,1}$ are obtained by interpolating $h_{1,1}$, $h_{5,1}$. The rest can be deduced by analogy.

Usually, a first-order linear interpolation method may be used to calculate a time-domain difference, and details are as follows.

It is assumed that channel responses of the first subcarrier on different OFDM symbols may be represented as $h_{i,1} = \alpha * i + \beta$, where $i$ is a sequence number of the OFDM symbol.

According to the known $h_{1,1}$, $h_{1,5}$, $h_{1,1} = \alpha * 1 + \beta$ and $h_{5,1} = \alpha * 5 + \beta$ can be obtained, and then

$$\alpha = \frac{h_{5,1} - h_{1,1}}{4} \text{ and } \beta = \frac{5h_{1,1} - h_{5,1}}{4} \text{ are obtained.}$$

According to $\alpha$, $\beta$, and the formula $h_{i,1} = \alpha * i + \beta$, results of remaining $h_{2,1}$, $h_{3,1}$, $h_{4,1}$ and $h_{6,1}$, $h_{7,1}$, $h_{8,1}$ can be obtained.

Based on this, channel estimation results of all OFDM symbols on the first, third, fifth, and seventh subcarriers are calculated by using the time domain interpolation. Then, on each OFDM symbol, channel estimation results on other subcarriers are obtained by using the interpolation method based on the obtained channel estimation results. Implementation of the interpolation method is similar to implementation of the time domain interpolation, for example, $h_{1,2} = \frac{h_{1,1}+h_{1,3}}{2}$, $h_{1,4} = \frac{h_{1,3}+h_{1,5}}{2}$, $h_{1,6} = \frac{h_{1,5}+h_{1,7}}{2}$, and $h_{1,8} = \frac{4h_{1,7}-3h_{1,5}}{2}$.

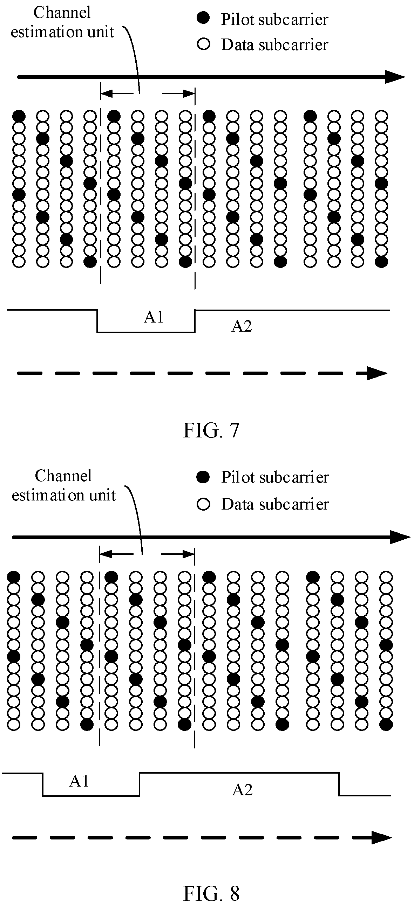

In this embodiment of this application, duration of one modulation symbol in the back-reflection signal is N times duration of one channel estimation unit in the background signal, a time start location of the modulation symbol is aligned with a time start location of the signal estimation unit, and N is an integer greater than or equal to 1. For example, one channel estimation unit includes four OFDM symbols. FIG. 7 is a schematic diagram of a back-reflection signal and a background signal using an LTE-type pilot structure according to an embodiment of this application. As shown in FIG. 7, an amplitude of one OOK modulation symbol may be A1 or A2, and duration of the OOK modulation symbol is one time duration of one channel estimation unit in the background signal. In other words, duration of the OOK modulation symbol is the same as the duration of the one channel estimation unit. In addition, a time start location of each OOK modulation symbol is aligned with a time start location of a corresponding signal estimation unit. Similarly, a phase of one BPSK modulation symbol may be +1 or -1, and duration of the BPSK modulation symbol is one time the duration of the one channel estimation unit in the background signal. In other words, the duration of the BPSK modulation symbol is the same as the duration of the one channel estimation unit. In addition, a time start location of each BPSK modulation symbol is aligned with a time start location of a corresponding signal estimation unit.

Based on this, although the back-reflection signal changes the amplitude of the background signal (for example, when the back-reflection signal uses the OOK modulation scheme, the back-reflection signal changes the amplitude of the background signal) or the phase (for example, when the back-reflection signal uses the BPSK modulation scheme, the back-reflection signal changes the phase of the background signal), the change of the background signal in one or more channel estimation units is constant, and the change may be obtained through channel estimation, to eliminate the impact of the back-reflection signal on the background signal. For example, one channel estimation unit includes four OFDM symbols. FIG. 8 is a schematic diagram of a back-reflection signal and a background signal using an LTE-type pilot structure according to another embodiment of this application. Compared with FIG. 7 and FIG. 8, the back-reflection signal and the background signal shown in FIG. 8 do not have the following relationship: Duration of one modulation symbol in the back-reflection signal is N times duration of one channel estimation unit in the background signal, and a time start location of the modulation symbol is aligned with a time start location of the signal estimation unit. In FIG. 8, energy in the first half of the one channel estimation unit is reduced through reflection, and energy in the last half of the one channel estimation unit is enhanced through reflection. This causes a large deviation in channel estimation, and further causes a situation in which the background signal is incorrectly received or the background signal cannot be received. On the contrary, as shown in FIG. 7, a change brought by the back-reflection signal to the background signal is based on the duration of the channel estimation unit. Although the back-reflection signal changes an amplitude or a phase of the background signal, the change of the background signal in one or more channel estimation units is constant, and the change may be obtained through channel estimation, to eliminate impact of the back-reflection signal on normal transmission of the background signal.

For example, the following describes the foregoing solution by using an example in which the first device is a label, the second device is a base station, and the third device is a terminal device.

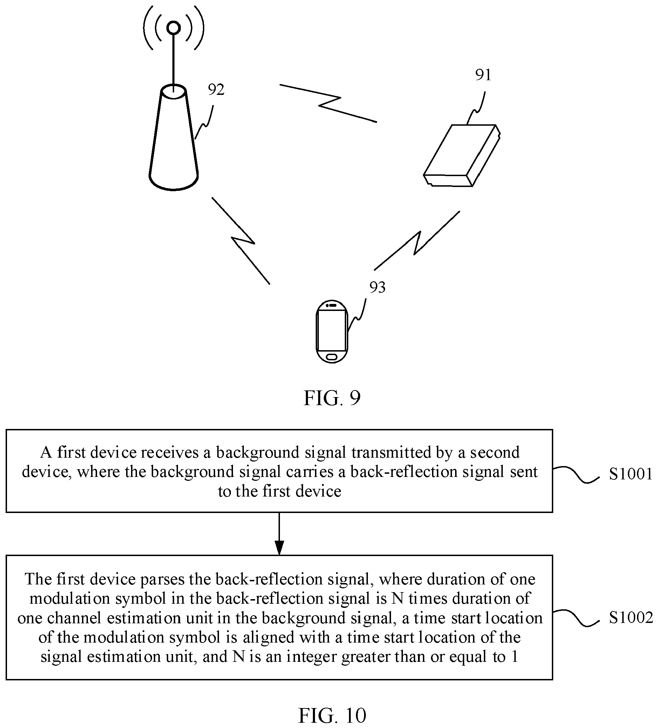

FIG. 9 is a schematic diagram of an application scenario according to still another embodiment of this application. As shown in FIG. 9, a label 91 may obtain a background signal sent by a base station 92 to a terminal device 93. The background signal carries data such as video, an image, or a voice that is sent by the base station 92 to the terminal device 93. Alternatively, the label 91 may obtain a background signal sent by the terminal device 93 to the base station 92. The background signal carries data such as video, an image, or a voice that is sent by the terminal device 93 to the base station 92. The label 91 sends a back-reflection signal of the background signal to the base station 92 or the terminal device 93 in the back-reflection communications mode. The back-reflection signal may carry data sent by the label 91 to the base station 92 or the terminal device 93, and the data may include information about the label 91, and the like. Duration of one modulation symbol in the back-reflection signal is N times duration of one channel estimation unit in the background signal, a time start location of the modulation symbol is aligned with a time start location of the signal estimation unit. After receiving a signal on which the background signal and the back-reflection signal are superimposed, the terminal device 93 first demodulates the signal to obtain the background signal, and then parses the background signal in a conventional manner to obtain the data such as the video, the image, or the voice that is sent by the base station 92 to the terminal device 93. However, a device, for example, another label, that needs to receive the information about the label 91 may parse only the signal on which the background signal and the back-reflection signal are superimposed to obtain the information about the label 91, without further parsing information included in the background signal.

In this embodiment, when the background signal is the signal using the Wi-Fi-type pilot structure, and the background signal includes a constructed channel estimation unit, or when the background signal is the signal using the LTE-type pilot structure, and the background signal includes a channel estimation unit. In the two cases, duration of one modulation symbol in the back-reflection signal generated by the first device is N times duration of one channel estimation unit in the background signal, and a time start location of the modulation symbol is aligned with a time start location of the signal estimation unit. Based on this, a change brought by the back-reflection signal to the background signal is based on the duration of the channel estimation unit. Although the back-reflection signal changes an amplitude or a phase of the background signal, the change of the background signal in one or more channel estimation units is constant, and the change may be obtained through channel estimation, to eliminate impact of the back-reflection signal on normal transmission of the background signal.

FIG. 10 is a flowchart of a back-reflection communications method according to another embodiment of this application. As shown in FIG. 10, the method includes the following procedures.

Step S1001: A first device receives a background signal transmitted by a second device, where the background signal carries a back-reflection signal sent to the first device.

Step S1002: The first device parses the back-reflection signal. Duration of one modulation symbol in the back-reflection signal is N times duration of one channel estimation unit in the background signal, a time start location of the modulation symbol is aligned with a time start location of the signal estimation unit, and N is an integer greater than or equal to 1.

A similarity between this embodiment and the foregoing embodiment is that the second device communicates with another device in a Wi-Fi communications mode. In this case, the background signal uses a Wi-Fi-type pilot structure. Optionally, the background signal using the Wi-Fi-type pilot structure includes a physical layer preamble and a data field, and the data field includes at least one signal estimation unit. The channel estimation unit includes one channel estimation field, and at least one data symbol adjacent to the channel estimation field. Alternatively, when the second device communicates with the another device in an LTE communications mode, the background signal uses an LTE-type pilot structure. A difference between this embodiment and the foregoing embodiment is as follows: In this embodiment, the first device receives the back-reflection signal from the second device. In other words, the first device is used as a receive end of the back-reflection signal. In the foregoing embodiment, the first device sends the back-reflection signal in the back-reflection communications mode. In other words, the first device is used as a transmit end of the back-reflection signal.

Optionally, because the background signal carries the back-reflection signal sent to the first device, after generating the background signal, the second device further modulates the background signal, so that the background signal carries the back-reflection signal. In addition, duration of the modulation symbol in the back-reflection signal is N times duration of a channel estimation unit in the background signal, a time start location of the modulation symbol is aligned with a time start location of the signal estimation unit, and N is an integer greater than or equal to 1. For several implementations of the background signal and the back-reflection signal, refer to the description in the foregoing embodiment. Details are not described herein again.

The data field of the background signal includes information to be sent by the second device to the another device. The back-reflection signal carried in the background signal includes information to be sent by the second device to the first device. Optionally, the second device may determine, based on duration of the information to be sent to the first device, whether to add a padding part after a data part of the data field of the background signal. For example, if the second device determines that the information sent to the first device is relatively long and exceeds duration of the data part that is originally sent to the another device, the second device needs to add the padding part after the data part, so that the duration of the data field of the background signal is sufficient to carry the information sent by the second device to the first device. Optionally, the physical layer preamble of the background signal further includes at least two of a total length indication, a first length indication, or a second length indication. Meanings of the total length indication, the first length indication, and the second length indication have been described in the foregoing embodiment, and details are not described herein again.

After receiving the background signal that is sent by the second device and that carries the back-reflection signal, the first device demodulates, by using a method corresponding to a method of modulating the background signal by the first device, the background signal that carries the back-reflection signal, to obtain the information in the back-reflection signal. However, after obtaining, by demodulating the background signal by using the method corresponding to the method of modulating the background signal by the first device, the background signal that carries the back-reflection signal, the another device that receives the background signal that is sent by the second device and that carries the back-reflection signal further needs to parse the background signal, to obtain the information sent by the second device to the device.

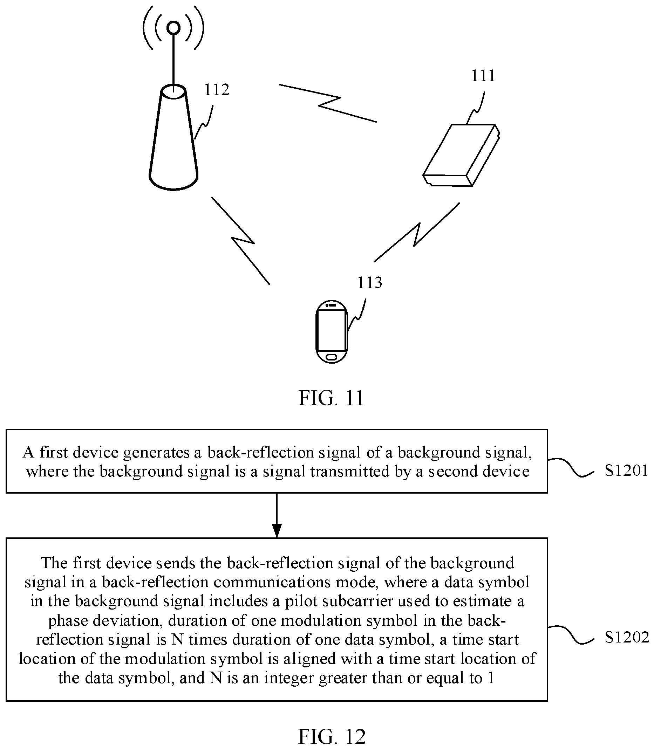

FIG. 11 is a schematic diagram of an application scenario according to still another embodiment of this application. As shown in FIG. 11, a label 111 may receive a background signal sent by a base station 112 to a terminal device 113. The background signal carries data such as video, an image, or a voice that is sent by the base station 112 to the terminal device 113. In addition, the background signal carries a back-reflection signal sent by the base station 112 to the label 111. Alternatively, the label 111 may receive a background signal sent by the terminal device 113 to the base station 112. The background signal carries data such as video, an image, or a voice that is sent by the terminal device 113 to the base station 112. In addition, the background signal carries a back-reflection signal sent by the terminal device 113 to the label 111. The label 111 parses the back-reflection signal, to obtain information sent by the base station 112 or the terminal device 113 to the label 111. Duration of one modulation symbol in the back-reflection signal is N times duration of one channel estimation unit in the background signal, a time start location of the modulation symbol is aligned with a time start location of the signal estimation unit, and N is an integer greater than or equal to 1. After receiving a signal on which the background signal and the back-reflection signal are superimposed, the terminal device 113 first demodulates the signal to obtain the background signal, and then parses the background signal in a conventional manner to obtain the data such as the video, the image, or the voice that is sent by the base station 112 to the terminal device 113. If the background signal uses a structure supporting Wi-Fi, the conventional manner may be parsing the background signal by using a Wi-Fi protocol. If the background signal uses a structure supporting LTE, the conventional manner may be parsing the background signal by using an LTE protocol. However, a device, for example, another label, that needs to receive information about the label 111 may parse only the signal on which the background signal and the back-reflection signal are superimposed to obtain the information about the label 111, without further parsing information included in the background signal.

For example, one channel estimation unit includes four OFDM symbols. As shown in FIG. 7, the back-reflection signal is a signal using an OOK modulation scheme or a signal using a BPSK modulation scheme. An amplitude of one OOK modulation symbol is A1 or A2, and duration of the OOK modulation symbol is one time the duration of the one channel estimation unit in the background signal. In other words, the duration of the OOK modulation symbol is the same as the duration of the one channel estimation unit. In addition, a time start location of each OOK modulation symbol is aligned with a time start location of a corresponding signal estimation unit. Similarly, a phase of one BPSK modulation symbol is +1 or -1, and duration of the BPSK modulation symbol is one time the duration of the one channel estimation unit in the background signal. In other words, the duration of the BPSK modulation symbol is the same as the duration of the one channel estimation unit. In addition, a time start location of each BPSK modulation symbol is aligned with a time start location of a corresponding signal estimation unit. Based on this, although the back-reflection signal changes an amplitude or a phase of the background signal, the change of the background signal in one or more channel estimation units is constant, and the change may be obtained through channel estimation, to eliminate impact of the back-reflection signal on the background signal.

FIG. 12 is a flowchart of a back-reflection communications method according to yet another embodiment of this application. As shown in FIG. 12, the method includes the following procedures.

Step S1201: A first device generates a back-reflection signal of a background signal, where the background signal is a signal transmitted by a second device.

Step S1202: The first device sends the back-reflection signal of the background signal in a back-reflection communications mode. A data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

Optionally, after detecting the background signal, the first device may modulate to-be-sent information based on the duration of the channel estimation unit in the background signal, to obtain the back-reflection signal. In this way, duration of one modulation symbol in the back-reflection signal is N times duration of one data symbol, the first device sends the back-reflection signal, a time start location of the modulation symbol in the back-reflection signal is aligned with a time start location of the data symbol, and N is an integer greater than or equal to 1.

As described above, the second device may communicate with another device in a Wi-Fi communications mode. This embodiment mainly describes a back-reflection communications mode used when the second device communicates with the another device in the Wi-Fi communications mode. A difference between this embodiment and the first embodiment is as follows: In this embodiment, the channel estimation unit does not need to be constructed, and the data symbol in the background signal includes the pilot subcarrier used to estimate the phase deviation. Principles of estimating the phase deviation based on the pilot subcarrier are as follows.

A signal received on the pilot subcarrier may be represented as $r_p = ph_p e^{j\phi} e^{j\theta}$. p is a known pilot signal sent on the pilot subcarrier. $\theta$ is a phase deviation introduced due to impact of the back-reflection signal on the background signal. $\phi$ is a phase deviation caused by another reason other than the phase deviation introduced due to the impact of the back-reflection signal on the background signal. $h_p$ is a channel on the pilot subcarrier, and $h_p$ has been estimated by using an LTF. Therefore, the phase deviation is obtained: $e^{j\phi} e^{j\theta}$.

Similarly, a signal received on a data subcarrier may be represented as $r_d = dh_d e^{j\phi} e^{j\theta}$, and an estimation result $\hat{d}$ of a sent signal d may be obtained in the following

manner: $\hat{d} = r_d/h_d * e^{-j\phi}e^{-j\theta}$.

It should be noted that, because the pilot subcarrier is only used to estimate the phase deviation, the back-reflection signal should be a signal using a phase modulation scheme. For example, the phase modulation scheme may be a QPSK modulation scheme or a BPSK modulation scheme.

When the second device communicates with the another device in the Wi-Fi communications mode, the background signal uses a Wi-Fi-type pilot structure. Optionally, the background signal using the Wi-Fi-type pilot structure includes a physical layer preamble and a data field, and the data field includes at least one data symbol. For example, the data symbol is an OFDM symbol.

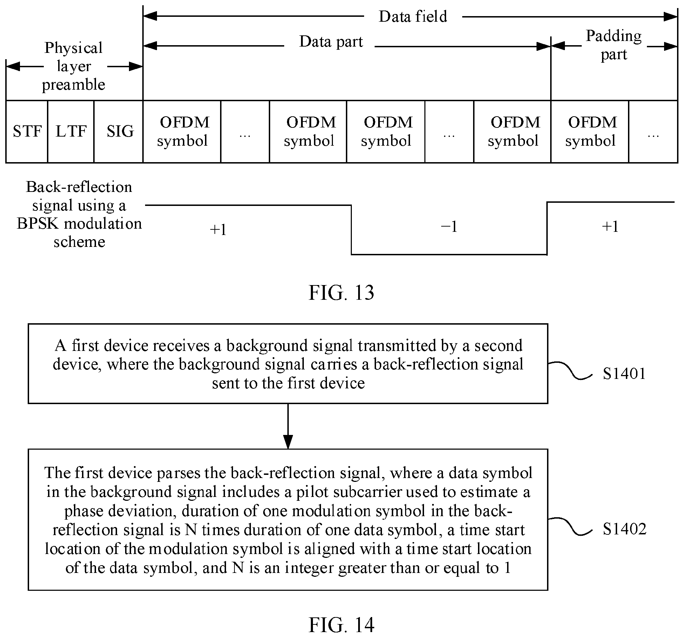

For example, FIG. 13 is a schematic diagram of a back-reflection signal and a background signal using a Wi-Fi-type pilot structure according to an embodiment of this application. As shown in FIG. 13, the background signal includes a physical layer preamble and a data field, and the data field includes at least one OFDM symbol. For example, the physical layer preamble includes an STF, an LTF, and a SIG field. The STF is a sequence known by a transmit end and a receive end, and is used to synchronize the receive end and the transmit end. The LTF is a sequence known by the transmit end and the receive end, and is used by the receive end to perform channel estimation on all data frames. The SIG field is control signaling, and is used to indicate information such as a modulation scheme and a coding scheme used for data sent by the transmit end.

In this embodiment of this application, duration of one modulation symbol in the back-reflection signal is N times duration of one data symbol in the background signal, a time start location of the modulation symbol is aligned with a time start location of the data symbol, and N is an integer greater than or equal to 1. As shown in FIG. 13, a phase of one BPSK modulation symbol is +1 or -1, duration of the BPSK modulation symbol is duration of several OFDM symbols in the background signal, and a time start location of each BPSK modulation symbol is aligned with a time start location of a corresponding OFDM symbol.

Based on this, although the back-reflection signal changes the phase of the background signal (for example, when the back-reflection signal uses a QPSK modulation scheme or a BPSK modulation scheme, the back-reflection signal changes the phase of the background signal), the change of the background signal in one or more data symbols is constant, and the change may be obtained through phase deviation estimation, to eliminate impact of the back-reflection signal on the background signal.

Optionally, as shown in FIG. 13, the data field of the background signal includes a data part, and the data part includes data sent by a second device. If transmission duration of the data part is less than transmission duration of the back-reflection signal, the data field further includes a padding part. It is assumed that the data field includes P data symbols. The first PI quantity of the P data symbols form the data part, the last P2 quantity of the P channel estimation units form a padding part, where P1 + P2 = P, and P, P1, and P2 are all integers. Based on this, the physical layer preamble of the background signal further includes information used to indicate a length of the data part and a length of the padding part. In an example, the information includes a first length indication and a second length indication. The first length indication is used to indicate the length of the data part, the second length indication is used to indicate the length of the padding part, and a sum of the length of the data part and the length of the padding part is a length of the data field. In another example, the information may include a total length indication and the first length indication, and the total length indication is used to indicate a total length of the data field. In still another example, the information may include the total length indication and the second length indication. It should be noted that "length" herein may refer to a length of a byte, or may refer to duration. It may be understood that the sum of the length of the data part and the length of the padding part is the length of the data field. Therefore, the physical layer preamble may indicate any two lengths thereof. In an example, an indication of any length may be carried in an L-Length field of the physical layer preamble, and another length indication may be carried in another field, for example, a newly added field, of the physical layer preamble. Alternatively, both the two length indications are carried in the SIG field.

In this embodiment, when the background signal is a signal using the Wi-Fi-type pilot structure, and the data symbol in the background signal includes the pilot subcarrier used to estimate the phase deviation. In this case, the duration of the one modulation symbol in the back-reflection signal generated by the first device is N times the duration of the one data symbol in the background signal, and the time start location of the modulation symbol is aligned with the time start location of the data symbol. Based on this, the change brought by the back-reflection signal to the background signal is based on the duration of the data symbol. Therefore, although the back-reflection signal changes the phase of the background signal, the change of the background signal in the one or more data symbols is constant, and the change may be obtained through phase deviation estimation, to eliminate the impact of the back-reflection signal on the background signal.

FIG. 14 is a flowchart of a back-reflection communications method according to still another embodiment of this application. As shown in FIG. 14, the method includes the following procedures.

Step S1401: A first device receives a background signal transmitted by a second device, where the background signal carries a back-reflection signal sent to the first device.

Step S1402: The first device parses the back-reflection signal, where a data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

A similarity between this embodiment and the foregoing embodiment is that the second device communicates with another device in a Wi-Fi communications mode. In this case, the background signal uses a Wi-Fi-type pilot structure. Optionally, the background signal using the Wi-Fi-type pilot structure includes a physical layer preamble and a data field, and the data field includes at least one data symbol. A difference between this embodiment and the foregoing embodiment is as follows: In this embodiment, the first device receives the back-reflection signal from the second device. In other words, the first device is used as a receive end of the back-reflection signal. In the foregoing embodiment, the first device sends the back-reflection signal in the back-reflection communications mode. In other words, the first device is used as a transmit end of the back-reflection signal.

For content the same as or similar to content of the foregoing embodiment, refer to the foregoing embodiment. Details are not described herein again.

Optionally, because the background signal carries the back-reflection signal sent to the first device, after generating the background signal, the second device further modulates the background signal, so that the background signal carries the back-reflection signal, and the data symbol in the background signal includes the pilot subcarrier used to estimate the phase deviation. In addition, duration of one modulation symbol in the back-reflection signal is N times duration of one data symbol, a time start location of the modulation symbol is aligned with a time start location of the data symbol, and N is an integer greater than or equal to 1. For several implementations of the background signal and the back-reflection signal, refer to the description in the foregoing embodiment. Details are not described herein again.

The data field of the background signal includes information to be sent by the second device to the another device. The back-reflection signal carried in the background signal includes information to be sent by the second device to the first device. Optionally, the second device may determine, based on duration of the information to be sent to the first device, whether to add a padding part after a data part of the data field of the background signal. For example, if the second device determines that the information sent to the first device is relatively long and exceeds duration of the data part that is originally sent to the another device, the second device needs to add the padding part after the data part, so that the duration of the data field of the background signal is sufficient to carry the information sent by the second device to the first device. Optionally, the physical layer preamble of the background signal further includes at least two of a total length indication, a first length indication, or a second length indication. Meanings of the total length indication, the first length indication, and the second length indication have been described in the foregoing embodiment, and details are not described herein again.

In this embodiment, when the background signal is a signal using the Wi-Fi-type pilot structure, and the background signal includes the pilot subcarrier used to estimate the phase deviation, in this case, the duration of the one modulation symbol in the back-reflection signal carried in the background signal is N times the duration of the one data symbol in the background signal, and the time start location of the modulation symbol is aligned with the time start location of the data symbol. Although the back-reflection signal changes the phase of the background signal, the change of the background signal in one or more data symbols is constant, and the change may be obtained through channel estimation, to eliminate impact of the back-reflection signal on normal transmission of the background signal.

The foregoing embodiments separately provide a manner in which the first device receives the back-reflection signal or a manner in which the first device sends the back-reflection signal when the second device transmits the background signal in the Wi-Fi communications mode (including a case in which the channel estimation unit needs to be constructed, and a case in which the channel estimation unit does not need to be constructed) or in the LTE communications mode. In addition, the background signal using the Wi-Fi-type pilot structure and how information is carried, and the background signal using the LTE-type pilot structure and how information is carried are provided. A process in which the first device receives the back-reflection signal and a process in which the first device sends the back-reflection signal may be coupled. It should be noted that the back-reflection signal received by the first device is different from the back-reflection signal sent by the first device. The following describes a process of combining the process in which the first device receives the back-reflection signal and the process in which the first device sends the back-reflection signal.

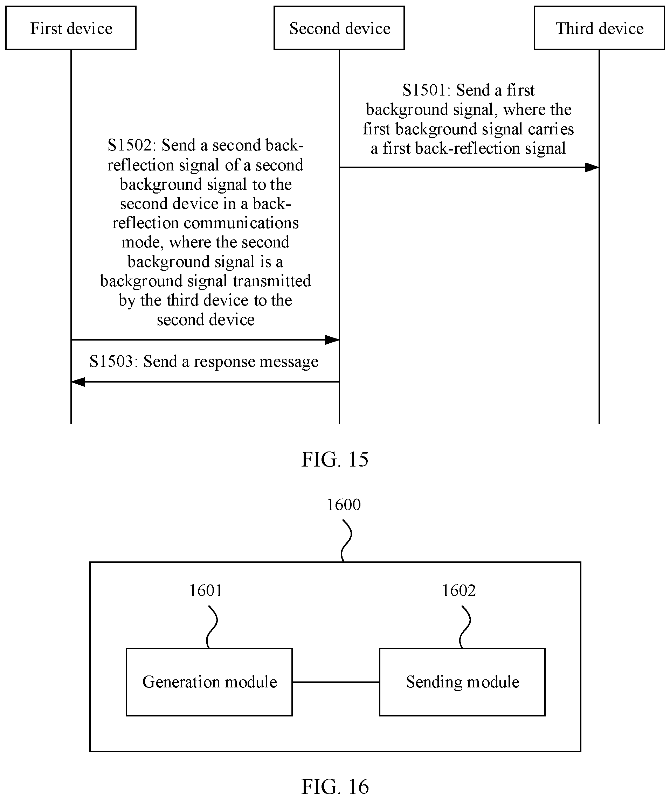

FIG. 15 is an interaction flowchart of a back-reflection communications method according to yet another embodiment of this application. As shown in FIG. 15, the method includes the following procedures.

Step S1501: A second device sends a first background signal to a third device, where the first background signal carries a first back-reflection signal.

If the second device sends the first background signal to the third device in a Wi-Fi communications mode, and the first background signal includes the channel estimation unit shown in FIG. 3, or if the second device sends the first background signal to the third device in an LTE communications mode, duration of one modulation symbol in the first back-reflection signal is N times duration of one channel estimation unit in the first background signal, a time start location of the modulation symbol is aligned with a time start location of the signal estimation unit, and N is an integer greater than or equal to 1.

If the second device sends the first background signal to the third device in a Wi-Fi communications mode, and the first background signal may use a signal format shown in FIG. 13, duration of one modulation symbol in the first back-reflection signal is N times duration of one data symbol in the first background signal, a time start location of the modulation symbol is aligned with a time start location of the data symbol, and N is an integer greater than or equal to 1.

Optionally, the first back-reflection signal carries information sent by the second device to a first device.

Optionally, the first background signal includes data sent by the second device to the third device, and the data may be video data, image data, voice data, or the like.

Optionally, the first background signal further includes indication information, and the indication information is used to indicate the third device to send a second background signal at specified time.

Step S1502: The first device sends a second back-reflection signal of the second background signal to the second device in a back-reflection communications mode, where the second background signal is a background signal transmitted by the third device to the second device.

When the first background signal includes the indication information, the third device sends the second background signal at the specified time.

Optionally, the second background signal includes data sent by the third device to the second device. For example, when the first background signal includes request information sent by the second device to the third device, the second background signal may include acknowledgment information sent by the third device to the second device.

If the third device sends the second background signal to the second device in the Wi-Fi communications mode, and the second background signal includes the channel estimation unit shown in FIG. 3, or if the third device sends the second background signal to the second device in the LTE communications mode, duration of one modulation symbol in the second back-reflection signal is N times duration of one channel estimation unit in the second background signal, a time start location of the modulation symbol is aligned with a time start location of the signal estimation unit, and N is an integer greater than or equal to 1.

If the third device sends the second background signal to the second device in the Wi-Fi communications mode, and the second background signal may use a signal format shown in FIG. 13, duration of one modulation symbol in the second back-reflection signal is N times duration of one data symbol in the second background signal, a time start location of the modulation symbol is aligned with a time start location of the data symbol, and N is an integer greater than or equal to 1.

Optionally, the second back-reflection signal includes data sent by the first device to the second device, and the data may be, for example, request information.

Optionally, the method further includes: step S1503: The second device sends a response message to the first device.

If the second back-reflection signal includes the request information sent by the first device to the second device, the second device may send the response message to the first device.

It should be noted that, for repeated content between this embodiment and the foregoing embodiment, refer to the foregoing embodiment. Details are not described herein again.

FIG. 16 is a schematic diagram of a back-reflection communications apparatus 1600 according to an embodiment of this application. The back-reflection communications apparatus is a part or all of the foregoing first device, and the apparatus has a back-reflection communications function. As shown in FIG. 16, the apparatus 1600 includes:

a generation module 1601, configured to generate a back-reflection signal of a background signal, where the background signal is a signal transmitted by a second device; and
a sending module 1602, configured to send the back-reflection signal of the background signal in a back-reflection communications mode.

Duration of one modulation symbol in the back-reflection signal is N times duration of one channel estimation unit in the background signal, a time start location of the modulation symbol is aligned with a time start location of the signal estimation unit, and N is an integer greater than or equal to 1.

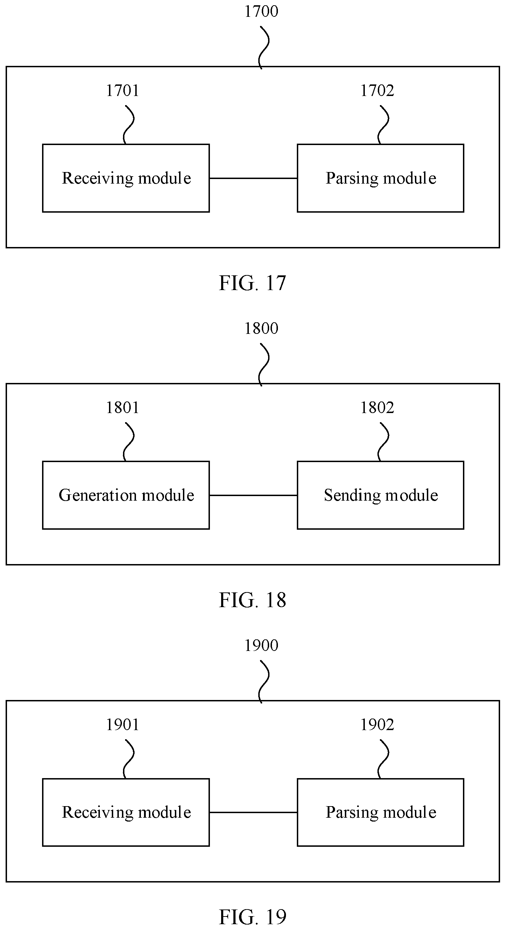

FIG. 17 is a schematic diagram of a back-reflection communications apparatus 1700 according to an embodiment of this application. The back-reflection communications apparatus is a part or all of the foregoing first device. As shown in FIG. 17, the apparatus 1700 includes:

a receiving module 1701, configured to receive a background signal transmitted by a second device, where the background signal carries a back-reflection signal sent to the communications apparatus; and
a parsing module 1702, configured to parse the back-reflection signal.

Duration of one modulation symbol in the back-reflection signal is N times duration of one channel estimation unit in the background signal, a time start location of the modulation symbol is aligned with a time start location of the signal estimation unit, and N is an integer greater than or equal to 1.

Optionally, the background signal includes a physical layer preamble and a data field, and the data field includes at least one signal estimation unit. The channel estimation unit includes one channel estimation field, and at least one data symbol adjacent to the channel estimation field.

Optionally, the data field includes a data part and a padding part, the physical layer preamble of the background signal includes a first length indication and a second length indication, the first length indication is used to indicate a length of the data part, and the second length indication is used to indicate a length of the padding part.

Optionally, a modulation scheme of the back-reflection signal is QPSK, BPSK, or OOK.

Optionally, the channel estimation unit includes a plurality of symbols, each symbol includes at least one pilot subcarrier, and the pilot subcarrier is used for channel estimation.

Optionally, pilot subcarriers on the plurality of symbols are evenly distributed on the plurality of symbols.

The back-reflection communications apparatus provided in this application may be configured to perform the foregoing corresponding back-reflection communications method. For content and effects of the back-reflection communications apparatus, refer to the method embodiment. Details are not described again.

FIG. 18 is a schematic diagram of a back-reflection communications apparatus 1800 according to an embodiment of this application. The back-reflection communications apparatus is a part or all of the foregoing first device. As shown in FIG. 18, the apparatus 1800 includes:

a generation module 1801, configured to generate a back-reflection signal of a background signal, where the background signal is a signal transmitted by a second device; and
a sending module 1802, configured to send the back-reflection signal of the background signal in a back-reflection communications mode.

A data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

FIG. 19 is a schematic diagram of a back-reflection communications apparatus 1900 according to an embodiment of this application. The back-reflection communications apparatus is a part or all of the foregoing first device. As shown in FIG. 19, the apparatus 1900 includes:

a receiving module 1901, configured to receive a background signal transmitted by a second device, where the background signal carries a back-reflection signal sent to the communications apparatus; and
a parsing module 1902, configured to parse the back-reflection signal.

A data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

Optionally, the background signal includes a physical layer preamble and a data field, and the data field includes at least one data symbol.

Optionally, the data field includes a data part and a padding part, the physical layer preamble of the background signal includes a first length indication and a second length indication, the first length indication is used to indicate a length of the data part, and the second length indication is used to indicate a length of the padding part.

Optionally, the back-reflection signal is a signal using a QPSK modulation scheme or a BPSK modulation scheme.

The back-reflection communications apparatus provided in this application may be configured to perform the foregoing corresponding back-reflection communications method. For content and effects of the back-reflection communications apparatus, refer to the method embodiment. Details are not described again.

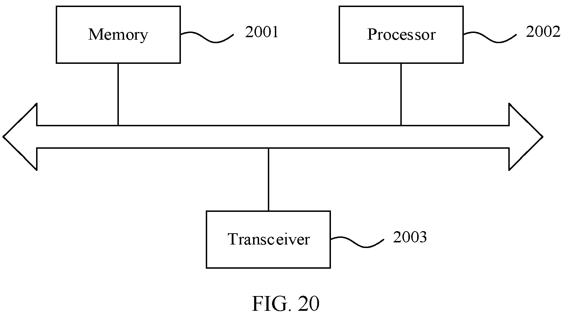

FIG. 20 is a schematic diagram of a back-reflection communications device according to an embodiment of this application. The back-reflection communications device is the foregoing first device. As shown in FIG. 20, the device includes a memory 2001, a processor 2002, and a transceiver 2003. The memory 2001 stores computer instructions, the transceiver 2003 is configured to perform data transmission with another device, and the processor 2002 is configured to execute the computer instructions, to implement a part or all of the foregoing back-reflection communications method.

The back-reflection communications device provided in this application may be configured to perform the foregoing corresponding back-reflection communications method. For content and effects of the back-reflection communications apparatus, refer to the method embodiment. Details are not described again.

An embodiment of this application further provides a communications apparatus, applied to a second device, and configured to perform the method or function related to the second device in the foregoing embodiment. In an example, the communications apparatus includes a generation module and a sending module. The generation module is configured to generate a background signal, and the background signal carries a back-reflection signal sent to a first device. The sending module is configured to send the back-reflection signal. Duration of one modulation symbol in the back-reflection signal is N times duration of one channel estimation unit in the background signal, a time start location of the modulation symbol is aligned with a time start location of the signal estimation unit, and N is an integer greater than or equal to 1. For the channel estimation unit, refer to the foregoing embodiment. Details are not described herein again. Certainly, the communications apparatus may alternatively be a chip in the second device. In this case, the generation module may be a processing circuit in the chip, and the sending module may be an input/output interface or the like of the chip. A communications apparatus on which the chip is installed may implement the method or function related to the foregoing second device.

This application further provides a storage medium, including a readable storage medium and computer instructions. The computer instructions are stored in the readable storage medium. The computer instructions are used to implement a part or all of the foregoing back-reflection communications method.

An embodiment of this application further provides a computer program product. The computer program product includes computer instructions, and the computer instructions are used to implement a part or all of the foregoing back-reflection communications method.

An embodiment of this application further provides a processor. The processor is configured to implement the foregoing method embodiment. The processor may be a chip. Optionally, the components in the embodiments of this application may be packaged on the chip, and may be operated and executed by an on-chip processing circuit. Optionally, the functions performed by the components in the embodiments of this application may be performed by an apparatus including a chip or a program that can execute the embodiments of this application.

An embodiment of this application further provides a chip, including a processing circuit and an input/output circuit. A communications apparatus on which the chip is installed may implement the method and function related to the foregoing first device.

An embodiment of this application further provides a communications apparatus, including a processor and a memory. The processor is coupled to the memory, and the memory stores instructions. When the processor executes the instructions, the communications apparatus is enabled to perform the method and function related to the foregoing first device. Optionally, the memory may be a cache in the processor, or may be a storage module external to the processor.

Methods or algorithm steps described in combination with the content disclosed in the embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor.

The foregoing describes the embodiments of this application with reference to the accompanying drawings. However, this application is not limited to the foregoing specific implementations. The foregoing specific implementations are merely examples, but not limitations. Enlightened by this application, a person of ordinary skill in the art may derive many variants without departing from the principle of this application and the protection scope of the claims, and these variants shall fall within the protection scope of this application.

**Claims**

1. A back-reflection communications method, comprising:

    generating, by a first device, a back-reflection signal of a background signal, wherein the background signal is a signal transmitted by a second device; and
    sending, by the first device, the back-reflection signal in a back-reflection communications mode; wherein
    duration of one modulation symbol in the back-reflection signal is N times duration of one channel estimation unit in the background signal, a time start location of the modulation symbol is aligned with a time start location of the signal estimation unit, and N is an integer greater than or equal to 1.

2. A back-reflection communications method, comprising:

    receiving, by a first device, a background signal transmitted by a second device, wherein the background signal carries a back-reflection signal sent to the first device; and
    parsing, by the first device, the back-reflection signal; wherein
    duration of one modulation symbol in the back-reflection signal is N times duration of one channel estimation unit in the background signal, a time start location of the modulation symbol is aligned with a time start location of the signal estimation unit, and N is an integer greater than or equal to 1.

3. The method according to claim 1 or 2, wherein the background signal comprises a physical layer preamble and a data field, and the data field comprises at least one signal estimation unit; and the channel estimation unit comprises one channel estimation field, and at least one data symbol adjacent to the channel estimation field.

4. The method according to claim 1 or 2, wherein the data field comprises a data part and a padding part, the physical layer preamble of the background signal comprises a first length indication and a second length indication, the first length indication is used to indicate a length of the data part, and the second length indication is used to indicate a length of the padding part.

5. The method according to claim 1 or 2, wherein a modulation scheme of the back-reflection signal is quadrature phase shift keying QPSK, binary phase shift keying BPSK, or on-off keying OOK.

6. The method according to claim 1 or 2, wherein the channel estimation unit comprises a plurality of symbols, each symbol comprises at least one pilot subcarrier, and the pilot subcarrier is used for channel estimation.

7. The method according to claim 6, wherein pilot subcarriers on the plurality of symbols are evenly distributed on the plurality of symbols.

8. A back-reflection communications method, comprising:

    generating, by a first device, a back-reflection signal of a background signal, wherein the background signal is a signal transmitted by a second device; and
    sending, by the first device, the back-reflection signal in a back-reflection communications mode; wherein
    a data symbol in the background signal comprises a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

9. A back-reflection communications method, comprising:

    receiving, by a first device, a background signal transmitted by a second device, wherein the background signal carries a back-reflection signal sent to the first device; and
    parsing, by the first device, the back-reflection signal; wherein
    a data symbol in the background signal comprises a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

10. The method according to claim 8 or 9, wherein the background signal comprises a physical layer preamble and a data field, and the data field comprises at least one data symbol.

11. The method according to claim 10, wherein the data field comprises a data part and a padding part, the physical layer preamble of the background signal comprises a first length indication and a second length indication, the first length indication is used to indicate a length of the data part, and the second length indication is used to indicate a length of the padding part.

12. The method according to any one of claims 8 to 11, wherein the back-reflection signal is a signal that uses a quadrature phase shift keying QPSK modulation scheme or a binary phase shift keying BPSK modulation scheme.

13. A back-reflection communications apparatus, comprising:

    a generation module, configured to generate a back-reflection signal of a background signal, wherein the background signal is a signal transmitted by a second device; and
    a sending module, configured to send the back-reflection signal in a back-reflection communications mode; wherein
    duration of one modulation symbol in the back-reflection signal is N times duration of one channel estimation unit in the background signal, a time start location of the modulation symbol is aligned with a time start location of the signal estimation unit, and N is an integer greater than or equal to 1.

14. A back-reflection communications apparatus, comprising:

a receiving module, configured to receive a background signal transmitted by a second device, wherein the background signal carries a back-reflection signal sent to the communications apparatus; and

a parsing module, configured to parse the back-reflection signal; wherein

duration of one modulation symbol in the back-reflection signal is N times duration of one channel estimation unit in the background signal, a time start location of the modulation symbol is aligned with a time start location of the signal estimation unit, and N is an integer greater than or equal to 1.

15. The apparatus according to claim 13 or 14, wherein the background signal comprises a physical layer preamble and a data field, and the data field comprises at least one signal estimation unit; and the channel estimation unit comprises one channel estimation field, and at least one data symbol adjacent to the channel estimation field.

16. The apparatus according to claim 13 or 14, wherein the data field comprises a data part and a padding part, the physical layer preamble of the background signal comprises a first length indication and a second length indication, the first length indication is used to indicate a length of the data part, and the second length indication is used to indicate a length of the padding part.

17. The apparatus according to claim 13 or 14, wherein a modulation scheme of the back-reflection signal is quadrature phase shift keying QPSK, binary phase shift keying BPSK, or on-off keying OOK.

18. The apparatus according to claim 13 or 14, wherein the channel estimation unit comprises a plurality of symbols, each symbol comprises at least one pilot subcarrier, and the pilot subcarrier is used for channel estimation.

19. The apparatus according to claim 18, wherein pilot subcarriers on the plurality of symbols are evenly distributed on the plurality of symbols.

20. A back-reflection communications apparatus, comprising:

a generation module, configured to generate a back-reflection signal of a background signal, wherein the background signal is a signal transmitted by a second device; and

a sending module, configured to send the back-reflection signal in a back-reflection communications mode; wherein

a data symbol in the background signal comprises a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

21. A back-reflection communications apparatus, comprising:

a receiving module, configured to receive a background signal transmitted by a second device, wherein the background signal carries a back-reflection signal sent to the communications apparatus; and

a parsing module, configured to parse the back-reflection signal; wherein

a data symbol in the background signal comprises a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1.

22. The apparatus according to claim 20 or 21, wherein the background signal comprises a physical layer preamble and a data field, and the data field comprises at least one data symbol.

23. The apparatus according to claim 22, wherein the data field comprises a data part and a padding part, the physical layer preamble of the background signal comprises a first length indication and a second length indication, the first length indication is used to indicate a length of the data part, and the second length indication is used to indicate a length of the padding part.

24. The apparatus according to any one of claims 20 to 23, wherein the back-reflection signal is a signal that uses a quadrature phase shift keying QPSK modulation scheme or a binary phase shift keying BPSK modulation scheme.

FIG. 1A

FIG. 1B

FIG. 1C

| A first device generates a back-reflection signal of a background signal, where the background signal is a signal transmitted by a second device | S201 |

| The first device sends the back-reflection signal of the background signal in a back-reflection communications mode, where duration of one modulation symbol in the back-reflection signal is N times duration of one channel estimation unit in the background signal, a time start location of the modulation symbol is aligned with a time start location of the signal estimation unit, and N is an integer greater than or equal to 1 | S202 |

FIG. 2

FIG. 3

EP 3 972 178 A1

FIG. 4

EP 3 972 178 A1

● Pilot subcarrier
○ Data subcarrier

Time domain

Frequency domain

Channel estimation unit

FIG. 5

$h_{1,1}$          $h_{5,1}$

$h_{3,7}$

Channel estimation unit

1  2  3                    8

$h_{1,1}$  $h_{2,1}$  $h_{3,1}$  $h_{4,1}$  $h_{5,1}$  $h_{6,1}$  $h_{7,1}$  $h_{8,1}$

Result after obtaining a time domain difference

1  2  3                    8

FIG. 6

FIG. 7

FIG. 8

FIG. 9

A first device receives a background signal transmitted by a second device, where the background signal carries a back-reflection signal sent to the first device — S1001

The first device parses the back-reflection signal, where duration of one modulation symbol in the back-reflection signal is N times duration of one channel estimation unit in the background signal, a time start location of the modulation symbol is aligned with a time start location of the signal estimation unit, and N is an integer greater than or equal to 1 — S1002

FIG. 10

FIG. 11

| A first device generates a back-reflection signal of a background signal, where the background signal is a signal transmitted by a second device | S1201 |

| The first device sends the back-reflection signal of the background signal in a back-reflection communications mode, where a data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1 | S1202 |

FIG. 12

| Physical layer preamble | | | Data field | | | | | | | |
| | | | Data part | | | | | | Padding part | |
| STF | LTF | SIG | OFDM symbol | ... | OFDM symbol | OFDM symbol | ... | OFDM symbol | OFDM symbol | ... |

Back-reflection signal using a BPSK modulation scheme

+1      −1      +1

FIG. 13

A first device receives a background signal transmitted by a second device, where the background signal carries a back-reflection signal sent to the first device    S1401

The first device parses the back-reflection signal, where a data symbol in the background signal includes a pilot subcarrier used to estimate a phase deviation, duration of one modulation symbol in the back-reflection signal is N times duration of one data symbol, a time start location of the modulation symbol is aligned with a time start location of the data symbol, and N is an integer greater than or equal to 1    S1402

FIG. 14

| First device | Second device | Third device |
|---|---|---|

S1501: Send a first background signal, where the first background signal carries a first back-reflection signal

S1502: Send a second back-reflection signal of a second background signal to the second device in a back-reflection communications mode, where the second background signal is a background signal transmitted by the third device to the second device

S1503: Send a response message

FIG. 15

1600

1601                          1602

| Generation module | Sending module |
|---|---|

FIG. 16

1700

1701                              1702

| Receiving module | | Parsing module |

FIG. 17

1800

1801                              1802

| Generation module | | Sending module |

FIG. 18

1900

1901                              1902

| Receiving module | | Parsing module |

FIG. 19

Memory — 2001

Processor — 2002

Transceiver — 2003

FIG. 20

## EP 3 972 178 A1

<table>
<tr><td colspan="2">INTERNATIONAL SEARCH REPORT</td><td>International application No.<br>**PCT/CN2020/092064**</td></tr>
</table>

**A.    CLASSIFICATION OF SUBJECT MATTER**

H04L 5/00(2006.01)i;  H04L 27/20(2006.01)i;  H04B 17/20(2015.01)i

According to International Patent Classification (IPC) or to both national classification and IPC

**B.    FIELDS SEARCHED**

Minimum documentation searched (classification system followed by classification symbols)

H04L; H04B

Documentation searched other than minimum documentation to the extent that such documents are included in the fields searched

Electronic data base consulted during the international search (name of data base and, where practicable, search terms used)

CNPAT, CNKI, EPODOC, WPI: 反射通信, 反向散射, 反射射频, 背景信号, 环境信号, 符号, 时长, 时间, 周期, 对齐, 信道估计, 导频, Backscatter, scatter+, environment, revers+, duration, time, length, symbol, align+, channel estimation, pilot

**C.    DOCUMENTS CONSIDERED TO BE RELEVANT**

| Category* | Citation of document, with indication, where appropriate, of the relevant passages | Relevant to claim No. |
|---|---|---|
| X | CN 109495412 A (UNIVERSITY OF ELECTRONIC SCIENCE AND TECHNOLOGY OF CHINA) 19 March 2019 (2019-03-19)<br>  description, paragraphs [0004]-[0040] | 1-24 |
| X | CN 109451591 A (UNIVERSITY OF ELECTRONIC SCIENCE AND TECHNOLOGY OF CHINA) 08 March 2019 (2019-03-08)<br>  description, paragraphs [0004]-[0044} | 1-24 |
| X | CN 109379118 A (UNIVERSITY OF ELECTRONIC SCIENCE AND TECHNOLOGY OF CHINA) 22 February 2019 (2019-02-22)<br>  description, paragraphs [0029]-[0072] | 1-24 |
| A | CN 109218240 A (TSINGHUA UNIVERSITY) 15 January 2019 (2019-01-15)<br>  entire document | 1-24 |
| A | US 2007001848 A1 (SYMBOL TECHNOLOGIES, INC.) 04 January 2007 (2007-01-04)<br>  entire document | 1-24 |
| A | US 2016094933 A1 (GOOGLE INC.) 31 March 2016 (2016-03-31)<br>  entire document | 1-24 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 August 2020** | **26 August 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/092064**

| Patent document cited in search report | | | Publication date (day/month/year) | Patent family member(s) | | | Publication date (day/month/year) |
|---|---|---|---|---|---|---|---|
| CN | 109495412 | A | 19 March 2019 | None | | | |
| CN | 109451591 | A | 08 March 2019 | None | | | |
| CN | 109379118 | A | 22 February 2019 | None | | | |
| CN | 109218240 | A | 15 January 2019 | None | | | |
| US | 2007001848 | A1 | 04 January 2007 | US | 2008110989 | A1 | 15 May 2008 |
| | | | | EP | 1907880 | A1 | 09 April 2008 |
| | | | | WO | 2007005500 | A1 | 11 January 2007 |
| US | 2016094933 | A1 | 31 March 2016 | KR | 20170010017 | A | 25 January 2017 |
| | | | | WO | 2016053504 | A1 | 07 April 2016 |
| | | | | EP | 3201839 | A1 | 09 August 2017 |
| | | | | CN | 106664510 | A | 10 May 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910507484